# EUROPÄISCHE PATENTSCHRIFT

(11) **EP 1 175 963 B1**
(45) Veröffentlichungstag und Bekanntmachung des Hinweises auf die Patenterteilung: **12.04.2006**
(21) Anmeldenummer: 01810730.0
(22) Anmeldetag: 23.07.2001
(51) Int. Cl.: B24B 27/00, B24B 5/313, B24B 5/04, B23Q 1/66, B23Q 1/62

(54) **Aussenrundschleifmaschine**
Machine for external cylindrical grinding
Rectifieuse cylindrique exterieure

(30) Priorität: 24.07.2000 CH 14602000
(43) Veröffentlichungstag der Anmeldung: 30.01.2002
(73) Patentinhaber: Fritz Studer AG, 3612 Steffisburg (CH)
(72) Erfinder: Tanner, Hans, 3629 Oppligen (CH)
(74) Vertreter: AMMANN PATENTANWÄLTE AG BERN

(56) Entgegenhaltungen:
- WO-A-99/61203
- DE-A- 3 524 311
- DE-C- 19 902 137
- US-A- 5 997 452

## Beschreibung

Die vorliegende Erfindung bezieht sich auf eine Aussenrundschleifmaschine gemäss Oberbegriff von Patentanspruch 1.

Üblicherweise werden präzise Aussendurchmesser kleiner zylindrischer Werkstücke in der Massenfabrikation auf Aussenrundschleifmaschinen zwischen zwei Spitzen gespannt und mit einer Aussenschleifscheibe geschliffen. Nach dem Schleifvorgang werden die Werkstücke mit einer Handhabungseinrichtung gewechselt. Bei den immer grösser werdenden Grossserienproduktionen ist eine der Hauptanforderungen die Minimierung der Nebenzeiten, verursacht durch das Werkstückladen und -entladen oder das Messen der Werkstücke in der Maschine. Insbesondere bei kleinen Werkstücken mit kurzen Schleifzeiten macht, durch das serielle Schleifen und Werkstückwechseln, in der Regel die Werkstückwechselzeit einen beträchtlichen Anteil an der gesamten Bearbeitungszeit aus.

Es sind Aussenrundschleifmaschinen vorbekannt, bei denen die Aussenrundschleifeinheit nach der Bearbeitung des ersten Werkstücks in Schleifrichtung zum zweiten Schleifstück verfährt. Bei dieser Lösung sind die Spannvorrichtungen für die Werkstücke auf der gleichen Achse nebeneinander angeordnet und die Schleifscheibe verfährt parallel zu dieser Achse, wodurch ein relativ langer Verfahrweg für die in der Regel grosse Aussenrundschleifscheibe erforderlich ist. Eine solche Maschine vermag zwar die Bearbeitungszeit zu reduzieren, doch sind die Dimensionen und der Platzbedarf solcher Maschinen gross.

Aus der US-A-5 997 452 und aus der WO-99 61203 ist eine Werkzeugmaschine mit zwei parallel angeordneten Werkzeughalter zur wechselweisen Bearbeitung von zwei Kurbelwellen bekannt, wobei die Bearbeitungsstation zwischen den beiden Werkzeughaltern angeordnet ist und eine Schleifscheibe zwischen den beiden Werkzeughaltern verfahrbar ist.

Es ist von diesem bekannten Stand der Technik ausgehend Aufgabe der vorliegenden Erfindung, eine hochpräzis arbeitende Aussenrundschleifmaschine vorzusehen, die eine kompakte Bauweise mit kleineren Maschinenteilen und geringem Platzbedarf aufweist sowie eine kostengünstige und rationelle Fertigung gestattet. Diese Aufgabe wird mit der Aussenrundschleifmaschine gemäss dem unabhängigen Patentanspruch 1 gelöst.

Die Erfindung wird im Folgenden anhand von Zeichnungen von Ausführungsbeispielen näher erläutert.
- Figur 1: zeigt ein erstes Ausführungsbeispiel mit einer Aussenrundschleifmaschine, bei der die Achsen der Werkstückspindelstöcke parallel zur Schleifspindelachse angeordnet sind, und
- Figur 2: zeigt ein Ausführungsbeispiel mit einer Aussenrundschleifmaschine, bei der die Achsen der Werkstückspindelstöcke bezüglich der Schleifspindelachse geneigt sind.

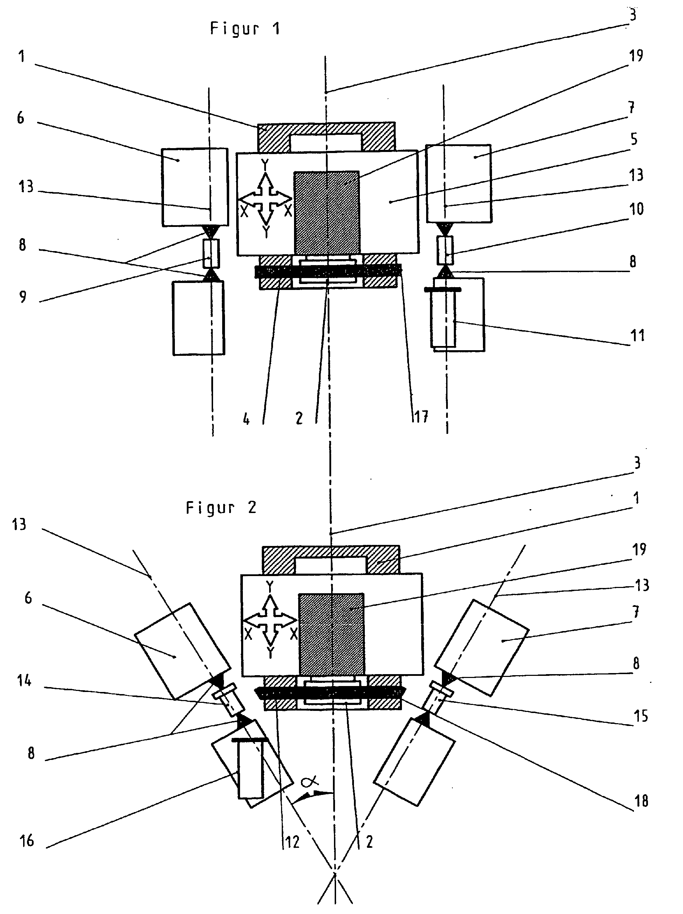

Figur 1 zeigt schematisch die wesentlichen Elemente der erfindungsgemässen Aussenrundschleifmaschine, die Rundschleifeinheit 1 mit einer Schleifspindel 2 mit ihrer Achse 3, der Schleifscheibe 4 mit der Bearbeitungskante 17 und ihrem Antrieb 19, wobei diese Rundschleifeinheit auf einem Kreuzschlitten 5 angeordnet ist, der in den beiden kartesischen Koordinatenachsen X und Y verfahrbar ist, wobei X senkrecht zur Spindelachse und Y parallel zur Spindelachse 3 angeordnet ist. Die gezeigten Teile sind auf einem nicht dargestellten, an sich bekannten Maschinenbett angeordnet.

Beidseitig der Rundschleifeinheit befinden sich zwei Werkstückspindelstöcke 6 und 7, die je einen Werkstückhalter 8 mit zwei Spitzen aufweisen. Der Rundschleifeinheit 1 ist ferner eine Abrichteinheit 11 zugeordnet, die dem Abrichten der Schleifscheibe 4 dient.

In Figur 2 ist die gleiche Rundschleifeinheit 1 wie in Figur 1 eingezeichnet, mit der Schleifspindel 2 mit ihrer Achse 3 und dem Antrieb 19, wobei auch diese Rundschleifeinheit auf dem Kreuzschlitten 5 montiert ist, der dieselben Koordinatenachsen X und Y aufweist wie im ersten Beispiel.

Im Unterschied zum ersten Ausführungsbeispiel ist die Bearbeitungskante 18 der Schleifscheibe 12 nicht parallel zur Schleifspindelachse 3 ausgerichtet, sondern unter einem Winkel α, der beispielsweise 30° beträgt. Demzufolge sind die Achsen 13 der Werkstückspindelstöcke 6 und 7 auch um den Winkel α bezüglich der Schleifspindelachse 3 geneigt, d. h. hier auch um 30°. Der Winkel α kann in einem weiten Bereich von 0° bis 45° liegen, je nach Anwendung. Dadurch wird eine andere Bearbeitung der Werkstücke 14 und 15 als im ersten Beispiel möglich, z. B. die Erzeugung eines Kragens. In diesem Ausführungsbeispiel befindet sich die Abrichteinheit 16 auf der linken Seite der Schleifscheibe, doch kann sie selbstverständlich auch auf der anderen Seite angeordnet sein.

Die Arbeitsweise der Aussenrundschleifmaschine gemäss Erfindung ist wie folgt: Zuerst wird eines der Werkstücke, beispielsweise Werkstück 9 oder 14, bearbeitet, wobei die Rundschleifeinheit entlang der Koordinate X verfahren wurde bis die richtige Einstellung erzielt worden ist, und während dem Bearbeiten des Werkstückes 9 oder 14 kann das Werkstück 10 oder 15, das in diesem Falle fertig bearbeitet ist, entweder vermessen und/oder entnommen und ausgewechselt werden. Der Begriff Auswechseln beinhaltet das genaue Positionieren des Werkstücks bezüglich Umfang und Längsachse. Das Messen, Entnehmen, Auswechseln und Positionieren erfolgt im gleichen Zeitraum, in welchem das erste Werkstück 9 oder 14 bearbeitet wird, d. h. es werden simultan verschiedene Bearbeitungen an zwei Werkstücken vorgenommen. Nach Beendigung des Arbeitsvorganges wird die Rundschleifeinheit in den vorliegenden Ausführungsbeispielen auf dem Kreuzschlitten nach rechts, d. h. zum anderen Werkstück hin, verfahren und gleichzeitig dazu wird das erste Werkstück 9 oder 14 vermessen und entnommen oder nur entnommen und ein anderes Werkstück wird eingespannt.

Aus der Beschreibung und den Zeichnungen geht hervor, dass der Kreuzschlitten nur einen sehr kurzen Weg verfahren muss, um das Werkzeug, die Schleifscheibe, abwechslungsweise in die Arbeitsstellung für das eine und für das andere Werkstück zu bringen, so dass bei geeigneter Einstellung und Ausführung der Werkstückwechseleinheit und der Messeinheit ein nahezu kontinuierliches Schleifen der Werkstücke möglich ist.

Infolge der kurzen Fahrwege des Kreuzschlittens werden nur relativ kleine Maschinenteile benötigt, wodurch eine sehr kompakte Bauweise möglich ist. Aus dem Vergleich der Figuren 1 und 2 geht ferner hervor, dass ein baukastenförmiger Aufbau verschiedenster Maschinen möglich ist und dass dazu auf an sich bekannte und bewährte Teile wie Kreuzschlitten, Spindeln und Antriebe zurückgegriffen werden kann.

Die beiden beschriebenen Beispiele beruhen auf der Verwendung von Kreuzschlitten mit den kartesischen Achsen, doch ist es im Rahmen der Erfindung auch möglich, mindestens eine der beiden Translationsachsen längs einer gekrümmten Bahn oder Kreisbahn zu verschieben, um die Schleifscheibe von einem Werkstück zum anderen zu bringen.

## Patentansprüche

1. Aussenrundschleifmaschine mit einer Rundschleifeinheit zur abwechslungsweisen Bearbeitung eines Werkstücks (9; 14), das in einem ersten Werkstückspindelstock (6) gehalten ist, und eines weiteren Werkstücks (10, 15), das in einem zweiten Werkstückspindelstock (7) gehalten ist, wobei die Rundschleifeinheit (1) zwischen den Werkstückspindelstöcken (6, 7) angeordnet und längs zweier Achsen (X, Y) verfahrbar ist, **dadurch gekennzeichnet, dass** die Bearbeitungskante (17; 18) der Schleifscheibe (4; 12) und die Achsen (13) der Werkstückspindelstöcke (6, 7) unter einem Winkel (α) zur Schleifspindelachse (3), jedoch nicht parallel dazu, angeordnet sind.

2. Aussenrundschleifmaschine nach Anspruch 1, **dadurch gekennzeichnet, dass** die Rundschleifeinheit (1) auf einem Kreuzschlitten (5) angeordnet ist.

3. Verwendung der Aussenrundschleifmaschine nach Anspruch 1 oder 2, **dadurch gekennzeichnet, dass** während dem Schleifen des einen Werkstücks (9, 14) ein anderes Werkstück (10, 15) gemessen und/oder gewechselt und positioniert wird.

## Claims

1. External circular grinding machine with a circular grinding unit for alternately machining a workpiece (9; 14) that is held in a first workpiece spindle head (6) and another workpiece (10, 15) that is held in a second workpiece spindle head (7), the circular grinding unit (1) being arranged between the workpiece spindle heads (6, 7) and being displaceable along two axes (X, Y), **characterised in that** the machining edge (17; 18) of the grinding wheel (4; 12) and the axes (13) of the workpiece spindle heads (6, 7) are arranged at an angle (α) with respect to the grinding spindle axis (3) but not parallel thereto.

2. External circular grinding machine according to claim 1, **characterised in that** the circular grinding unit (1) is arranged on a compound slide (5).

3. Use of the external circular grinding machine according to claim 1 or 2, **characterised in that** while one of the workpieces (9, 14) is being ground, another workpiece (10, 15) is being measured and/or changed and positioned.

## Revendications

1. Rectifieuse cylindrique extérieure avec une unité de rectification cylindrique pour l'usinage alternant d'une pièce à usiner (9; 14) retenue dans une première tête porte-pièce (6) et d'une autre pièce à usiner (10, 15) retenue dans une deuxième tête porte-pièce (7), l'unité de rectification cylindrique (1) étant agencée entre les têtes porte-pièces (6, 7) et déplaçable le long de deux axes (X, Y), **caractérisée en ce que** l'arête d'usinage (17; 18) de la meule (4; 12) et les axes (13) des têtes porte-pièces (6, 7) sont agencées à un angle (α) par rapport à l'axe de la broche porte-meule (3) mais non pas parallèlement à cette dernière.

2. Rectifieuse cylindrique extérieure selon la revendication 1, **caractérisée en ce que** l'unité de rectification cylindrique (1) est agencée sur un chariot à croix (5).

3. Utilisation de la rectifieuse cylindrique extérieure selon la revendication 1 ou 2, **caractérisée en ce que** pendant la rectification de l'une des pièces à usiner (9, 14), une autre pièce à usiner (10, 15) est mesurée et/ou changée et positionnée.
